# EUROPÄISCHE PATENTANMELDUNG

(11) **EP 1 178 441 A2**
(43) Veröffentlichungstag der Anmeldung: **06.02.2002**
(21) Anmeldenummer: 01112071.4
(22) Anmeldetag: 28.05.2001
(51) Int. Cl.: G07D 7/08

(54) **Verfahren zur Bestimmung von Strukturinhomogenitäten in Blattgut**

(30) Priorität: 21.06.2000 DE 10029442
(71) Anmelder: Giesecke & Devrient GmbH, 81677 München (DE)
(72) Erfinder: Wunderer, Bernd, Dr., 80805 München (DE); Schanda, Ulrich, Dr., 83607 Holzkirchen (DE)

(57) **Zusammenfassung**

Die Erfindung betrifft ein Verfahren zur Bestimmung von Strukturinhomogenitäten in Blattgut, insbesondere aufgrund von Knitterfalten oder Rissen in Banknoten.

Zur Erhöhung der Zuverlässigkeit und zur Vereinfachung der Durchführung dieses Verfahrens ist vorgesehen, daß das Blattgut mit Ultraschall beaufschlagt wird, der durch das Blattgut transmittierte oder am Blattgut reflektierte Ultraschall gemessen wird, wobei ein für den transmittierten bzw. reflektierten Ultraschall charakteristischer erster Wert erzeugt wird, und aus dem ersten Wert ein Maß für die Strukturinhomogenitäten im Blattgut bestimmt wird.

## Beschreibung

Die Erfindung betrifft ein Verfahren zur Bestimmung von Strukturinhomogenitäten, insbesondere aufgrund von Knitterfalten oder Rissen, in Blattgut, wie z.B. Banknoten.

Bei der Prüfung und Sortierung von Banknoten, beispielsweise in Geschäfts-oder Zentralbanken, wird im allgemeinen auch deren Zustand, z.B. deren Verschmutzungsgrad, ermittelt. Die Banknoten werden hierbei nach ihrem Zustand sortiert und entsprechend unterschiedlich weiterbehandelt. Während Banknoten in schlechtem Zustand im allgemeinen einbehalten werden und gegebenenfalls vernichtet werden, können Banknoten in gutem Zustand wieder in den Umlauf zurückgegeben werden.

Neben der Verschmutzung können unter anderem auch Strukturinhomogenitäten, wie beispielsweise Knitterfalten, feine Risse oder kleine Löcher in der Banknote, zur Beurteilung des Zustands herangezogen werden. Die Messung von Strukturinhomogenitäten in Banknoten erfolgt hierbei unter anderem über optische Methoden, bei welchen beispielsweise die zu untersuchende Banknote mit Licht bestrahlt wird und der reflektierte oder transmittierte Anteil des Lichts gemessen und ausgewertet wird. Optische Methoden haben jedoch allgemein den Nachteil, daß Messungen durch Umgebungslicht leicht gestört werden können und die Empfindlichkeit der meist verwendeten Detektoren sowie die Stärke der eingesetzten Lichtquellen im allgemeinen zeitlichen Schwankungen unterliegen, welche ebenfalls die Messung verfälschen. Darüber hinaus ist oft eine abbildende Optik aus Linsen und/oder Blenden erforderlich, welche einen gewissen Justageaufwand bei der Fertigung und Wartung entsprechender Meßsysteme zur Folge hat.

Der Erfindung liegt die Aufgabe zugrunde, ein Verfahren zur Bestimmung von Strukturinhomogenitäten in Blattgut anzugeben, welches die obengenannten Nachteile vermeidet.

Diese Aufgabe wird gemäß Anspruch 1 dadurch gelöst, daß das Blattgut mit Ultraschall beaufschlagt und der durch das Blattgut transmittierte und/oder am Blattgut reflektierte Ultraschall gemessen wird, wobei mindestens ein für den transmittierten und/oder reflektierten Ultraschall charakteristischer erster Wert erzeugt wird. Aus dem erzeugten ersten Wert wird dann ein Maß für die Strukturinhomogenitäten im Blattgut bestimmt. Durch die Verwendung von Ultraschall wird der Einfluß von Störungen, insbesondere aufgrund von Umgebungslicht, vermieden. Darüber hinaus wird der Justageaufwand reduziert.

In einer bevorzugten Ausgestaltung des Verfahrens ist vorgesehen, daß der transmittierte und/oder reflektierte Ultraschall an mehreren Stellen des Blattguts gemessen wird und für jede der Stellen, an welchen der transmittierte bzw. reflektierte Ultraschall gemessen wird, jeweils ein für den transmittierten bzw. reflektierten Ultraschall charakteristischer erster Wert erzeugt wird. Aus den ersten Werten oder aus zweiten Werten, welche aus den ersten Werten gebildet werden, wird schließlich ein erster Mittelwert als Maß für die Strukturinhomogenitäten im Blattgut gebildet. Der erste Mittelwert kann hierbei der arithmetische, geometrische oder quadratische Mittelwert der ersten bzw. zweiten Werte sein. Hierdurch wird ein mittleres Maß für die Strukturinhomogenitäten im Blattgut ermittelt, so daß stärkere lokale Schwankungen ausgeglichen werden und damit eine Aussage über den Zustand des Blattes "insgesamt" im Hinblick auf Knitterfalten oder Risse getroffen werden kann.

In einer weiteren Variante des Verfahrens entspricht der erste Mittelwert der Standardabweichung der ersten bzw. zweiten Werte vom arithmetischen Mittelwert, welcher aus den ersten bzw. zweiten Werten gebildet wird. Der erste Mittelwert gibt dann die durchschnittliche Abweichung der ersten bzw. zweiten Werte von deren arithmetischen Mittelwert an und stellt ein Maß für Abweichungen der an den einzelnen Stellen bestimmten Strukturinhomogenitäten von deren Durchschnittswert dar.

In einer weiteren Ausgestaltung des Verfahrens ist vorgesehen, daß die Stellen, an welchen der transmittierte und/oder reflektierte Ultraschall gemessen wird, auf einer auf dem Blattgut linear verlaufenden Spur liegen. Bevorzugterweise berühren oder überlappen sich die auf dem Blattgut vermessenen Stellen, so daß auf diese Weise eine durchgängige Spur definiert wird. Die Lage und/oder Länge und/oder Breite der Spur kann hierbei so gewählt werden, daß die Spur nicht im Bereich von zusätzlich in das Blattgut ein- bzw. aufgebrachten Elementen, insbesondere Sicherheitsfäden, Wasserzeichen oder Hologrammfolien, liegt. Hierdurch wird gewährleistet, daß der erste Mittelwert lediglich von Strukturinhomogenitäten im Blattgut selbst herrührt und nicht von zusätzlichen Elementen, wie beispielsweise Sicherheitsfäden verfälscht wird.

Weiterhin ist es vorteilhaft, wenn der durch das Blattgut transmittierte und/oder am Blattgut reflektierte Ultraschall entlang mehrerer Spuren des Blattguts gemessen wird, wobei aus den ersten bzw. zweiten Werten für jede Spur jeweils ein erster Mittelwert gebildet wird. Aus den so erhaltenen ersten Mittelwerten der jeweiligen Spuren wird ein zweiter, beispielsweise arithmetischer, geometrischer oder quadratischer, Mittelwert als Maß für die Strukturinhomogenitäten im Blattgut gebildet. Durch diese weitere Mittelung wird eine besonders zuverlässige Aussage über die im Mittel im Blattgut befindlichen Strukturinhomogenitäten erreicht.

In einer weiteren Ausgestaltung des erfindungsgemäßen Verfahrens ist vorgesehen, daß die zweiten Werte aus der zweiten Ableitung der ersten Werte gebildet werden. Hierdurch werden Beiträge von Strukturinhomogenitäten mit größerer räumlicher Ausdehnung stärker gedämpft als Beiträge kleinerer Inhomogenitäten. Im daraus gebildeten ersten Mittelwert sind dann kleinere Strukturinhomogenitäten stärker berücksichtigt als größere, wodurch präzisere Aussagen über etwaige vorhandene kleinere Strukturfehler, z.B. kleine Risse oder Falten, möglich sind.

### Die Erfindung wird nun anhand von Figuren näher erläutert. Es zeigen:

- Fig. 1: eine Vorrichtung zur Durchführung des erfindungsgemäßen Verfahrens;
- Fig. 2: eine graphische Darstellung von ersten Werten, welche auf einer auf dem Blattgut linear verlaufenden Spur ermittelt wurden.

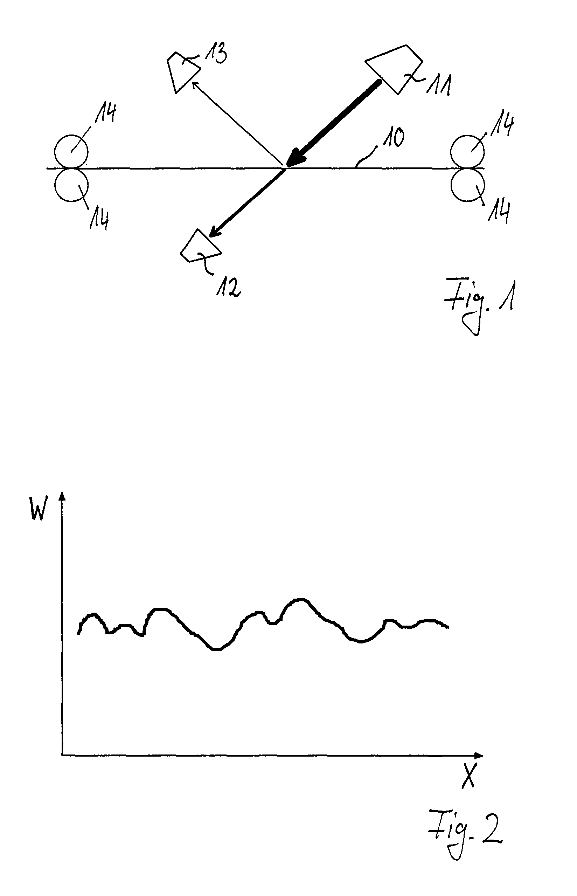

Figur 1 zeigt eine Vorrichtung zur Ausführung des erfindungsgemäßen Verfahrens. Das zu untersuchende Blattgut 10 wird mit Hilfe einer hier nur andeutungsweise durch Transportrollen 14 dargestellten Transporteinrichtung zwischen einem Ultraschallsender 11 und einem Ultraschalldetektor 12 transportiert. Der vom Ultraschallsender 11 emittierte und vom Blattgut 10 teilweise transmittierte Schall wird vom Ultraschalldetektor 12 detektiert. Zusätzlich oder alternativ kann der teilweise reflektierte Ultraschall, wie in der Figur dargestellt, von einem weiteren Ultraschalldetektor 13 detektiert werden. Zur Vermeidung von Störsignalen, welche von einer möglichen Reflexion von Schallanteilen zwischen Ultraschallsender 11 und Ultraschalldetektor 12 oder 13 herrühren, sind Ultraschallsender 11, Blattgut 10 und Ultraschalldetektor 12 bzw. 13 derart schräg zueinander angeordnet, daß derartige Reflexionen aus dem Strahlengang zwischen Ultraschallsender 11 und Ultraschalldetektor 12 bzw. 13 ausgeblendet werden. Wie im Beispiel dargestellt, wird hierzu das Blattgut 10 in einem von 90° verschiedenen Winkel mit Ultraschall beaufschlagt. Störsignale lassen sich überdies auch dadurch eliminieren, daß die Schallaufzeit zwischen dem Ultraschallsender 11 und dem Ultraschalldetektor 12 bzw. 13 bestimmt wird und bei der eigentlichen Messung der Ultraschalldetektor 12 bzw. 13 um die Schallaufzeit verzögert eingeschaltet und spätestens mit Ablauf der doppelten Schallaufzeit wieder abgeschaltet wird.

Das Reflexions- und/oder Transmissionsverhalten des Blattguts 10 wird vorzugsweise an mehreren Stellen des Blattguts 10 bestimmt, insbesondere an Stellen, welche auf einer linear auf dem Blattgut verlaufenden Spur liegen. Die einzelnen Stellen einer Spur können sich hierbei teilweise überlappen, berühren oder aber auch in bestimmten Abständen voneinander entfernt liegen. Eine Spurmessung wird beispielsweise realisiert, indem das Blattgut 10, insbesondere mit einer konstanten Geschwindigkeit, an den Ultraschalldetektoren 12 bzw. 13 vorbeitransportiert wird und der reflektierte und/oder transmittierte Schall in bestimmten Zeitabständen gemessen wird. Eine andere Möglichkeit der Realisierung einer Spurmessung kann darin bestehen, den reflektierten und/oder transmittierten Ultraschall mit mehreren, in einer Reihe angeordneten Ultraschalldetektoren (nicht dargestellt) zu messen, wobei jedem Ultraschalldetektor eine einzelne Stelle auf dem Blattgut 10 entspricht.

Figur 2 zeigt ein Diagramm mit ersten Werten, welche auf einer auf dem Blattgut linear verlaufenden Spur ermittelt wurden. Die ersten Werte W sind über den jeweiligen Stellen X auf dem Blattgut aufgetragen. Im dargestellten Fall handelt es sich um eine Messung, bei welcher die einzelnen Stellen X, an welchen erste Werte W bestimmt werden, dicht aneinander liegen. Erfindungsgemäß wird aus diesem graphischen Verlauf diskreter erster Werte der erste Mittelwert als Maß für die Strukturinhomogenitäten im Blattgut gebildet. Bei dem ersten Mittelwert kann es sich z.B. um den arithmetischen, geometrischen oder quadratischen Mittelwert oder aber auch um die Standardabweichung der Meßwerte vom arithmetischen Mittelwert handeln. Durch Bildung der zweiten Ableitung dieses graphischen Verlaufs der ersten Werte W nach den Stellen X, d.h. dem Ort auf dem Blattgut 10, werden in einer alternativen Variante des Verfahrens zweite Werte (nicht dargestellt) erzeugt. Durch Bildung der zweiten Ableitung werden Beiträge von Strukturinhomogenitäten mit größerer Ausdehnung stärker gedämpft als Beiträge kleinerer Strukturinhomogenitäten. Wird nun aus den so erzeugten zweiten Werten der erste Mittelwert gebildet, so sind in diesem kleinere Strukturinhomogenitäten stärker berücksichtigt, so daß hierdurch insbesondere Aussagen über das Vorhandensein kleinerer Knitterfalten oder sonstiger Strukturschwankungen möglich sind.

Bei Bedarf kann vorgesehen sein, daß das untersuchte Blattgut abhängig vom berechneten ersten oder zweiten Mittelwert einer Einrichtung zum Glätten von Knitterfalten, beispielsweise einer entsprechend geeigneten Bügeleinrichtung, zugeführt wird. Nach deren Glättung können die Banknoten dann, gegebenenfalls nach erneuter Bestimmung etwaiger verbliebener Strukturinhomogenitäten, wieder in den Umlauf gebracht werden.

## Patentansprüche

1. Verfahren zur Bestimmung von Strukturinhomogenitäten, insbesondere aufgrund von Knitterfalten oder Rissen, in Blattgut,
**dadurch gekennzeichnet, daß**
- das Blattgut mit Ultraschall beaufschlagt wird,
- der durch das Blattgut transmittierte und/oder am Blattgut reflektierte Ultraschall gemessen wird, wobei mindestens ein für den transmittierten und/oder reflektierten Ultraschall charakteristischer erster Wert erzeugt wird, und
- aus dem ersten Wert ein Maß für die Strukturinhomogenitäten im Blattgut bestimmt wird.

2. Verfahren nach Anspruch 1, **dadurch gekennzeichnet, daß**
- der transmittierte und/oder reflektierte Ultraschall an mehreren Stellen des Blattguts gemessen wird,
- für jede der Stellen, an welchen der transmittierte und/oder reflektierte Ultraschall gemessen wird, jeweils mindestens ein für den transmittierten und/oder reflektierten Ultraschall charakteristischer erster Wert erzeugt wird und
- aus den ersten Werten oder aus zweiten Werten, welche aus den ersten Werten gebildet werden, ein erster Mittelwert als Maß für die Strukturinhomogenitäten im Blattgut gebildet wird.

3. Verfahren nach Anspruch 2, **dadurch gekennzeichnet, daß**
- aus den ersten bzw. zweiten Werten der arithmetische Mittelwert gebildet wird,
- die Standardabweichung der ersten bzw. zweiten Werte vom arithmetischen Mittelwert gebildet wird und
- dem ersten Mittelwert die Standardabweichung zugeordnet wird.

4. Verfahren nach einem der Ansprüche 2 bis 3, **dadurch gekennzeichnet, daß** die Stellen, an welchen der transmittierte und/oder reflektierte Ultraschall gemessen wird, auf einer auf dem Blattgut linear verlaufenden Spur liegen.

5. Verfahren nach Anspruch 4, **dadurch gekennzeichnet, daß** die Lage und/oder Länge und/oder Breite der auf dem Blattgut verlaufenden Spur so gewählt wird, daß die Spur nicht im Bereich von zusätzlich in das Blattgut ein- bzw. aufgebrachten Elementen, insbesondere Sicherheitsfäden, Wasserzeichen oder Hologrammfolien, liegt.

6. Verfahren nach einem der Ansprüche 4 oder 5, **dadurch gekennzeichnet, daß** der durch das Blattgut transmittierte und/oder am Blattgut reflektierte Ultraschall entlang mehrerer Spuren des Blattguts gemessen wird, aus den ersten bzw. zweiten Werten für jede Spur jeweils ein erster Mittelwert gebildet wird und aus den ersten Mittelwerten der jeweiligen Spuren ein zweiter Mittelwert als Maß für die Strukturinhomogenitäten im Blattgut gebildet wird.

7. Verfahren nach Anspruch 6, **dadurch gekennzeichnet, daß** der zweite Mittelwert durch quadratische Mittelung der ersten Mittelwerte gebildet wird.

8. Verfahren nach einem der Ansprüche 2 bis 7, **dadurch gekennzeichnet, daß** die zweiten Werte durch die zweite Ableitung der ersten Werte gebildet werden.

9. Verfahren nach einem der Ansprüche 2 bis 8 **dadurch gekennzeichnet, daß** abhängig vom ersten und/oder zweiten Mittelwert das Blattgut einer Einrichtung zum Glätten der Strukturinhomogenitäten, insbesondere Bügeleinrichtung, zugeführt wird.
